# EUROPEAN PATENT SPECIFICATION

(11) **EP 2 154 830 B1**
(45) Date of publication and mention of the grant of the patent: **08.02.2017**
(21) Application number: 08739159.5
(22) Date of filing: 28.03.2008
(51) Int. Cl.: H04L 12/28

(54) **NETWORK COMMUNICATION DEVICE AND NETWORK COMMUNICATION METHOD**
NETZWERK-KOMMUNIKATIONSEINRICHTUNG UND NETZWERK-KOMMUNIKATIONSVERFAHREN
DISPOSITIF DE COMMUNICATION EN RÉSEAU ET PROCÉDÉ DE COMMUNICATION EN RÉSEAU

(30) Priority: 30.05.2007 JP 2007142881
(43) Date of publication of application: 17.02.2010
(73) Proprietor: D&M Holdings, Inc., Kanagawa 210-8569 (JP)
(72) Inventor: ARAI, Yuki, Kawasaki-shi Kanagawa 210-8569 (JP)
(74) Representative: Hackney, Nigel John
(86) International application number: PCT/JP2008/056035
(87) International publication number: WO 2008/146534

(56) References cited:
- WO-A2-2005/122025
- JP-A- 2003 229 853
- JP-A- 2004 134 967
- US-A1- 2004 218 614
- US-A1- 2005 021 603
- US-A1- 2005 152 287
- US-A1- 2006 056 397

## Description

### Technical Field

The present invention relates to a network communication device connected to a local network, and more particularly, to a network communication device that controls a router by using a Universal Plug and Play (UPnP) protocol.

### Background Art

Some routers for connecting a local network and a wide area network are provided with a port forwarding function in order to access a network communication device connected from the wide area network to the local network. The port forwarding function is a function of forwarding a communication packet transmitted to a predetermined port of the router on a wide area network side to a predetermined IP address and port on a local network side.

By thus using the router provided with the port forwarding function, it becomes possible for a terminal device on the wide area network such as the Internet to access the network communication device connected to the local network inside a house. Such a router is used for a system for remotely controlling a household electrical appliance via a network from the outside, an online game machine, and the like.

In a case of using the router provided with the port forwarding function, a user can use, for example, a browser on a PC to access a setting screen of the router therefrom and manually set the port forwarding function. Alternatively, by using a UPnP Internet Gateway Device protocol, it is possible for the network communication device to control the router to perform a port forwarding setting. If the router conforms to a UPnP Internet Gateway Device standard, the network communication device can use the UPnP Internet Gateway Device protocol to thereby transmit a command to the router via a network and enable a setting for port forwarding on the router if necessary or disable the setting if unnecessary.

Examples of the conventional technology for remotely controlling a household electrical appliance by using the UPnP Internet Gateway Device protocol include a technology disclosed in JP 2007-53530 A.

US2005/0152287 discloses an IP Device, Management Server, and Network System.

### Summary of the Invention

The UPnP Internet Gateway Device protocol has extremely complicated specifications, thereby raising a problem of causing a bug or the like in the router or the network communication device. Further, the UPnP Internet Gateway Device protocol is a protocol that allows interconnections between the network communication devices, and hence the problem of a bug may become obvious in communications between devices interconnected in combination with a specific device.

Therefore, manufacturers of the network communication device are performing connection tests with various routers. In addition, for users' reference when purchasing a router, many manufacturers of the network communication device publicly announce and recommend, on their website or the like, manufacturer names and product model numbers of routers of which normal operations have been confirmed.

However, there exist extremely many models of routers, which leads to such a problem that the manufacturers of the network communication device bear an enormous burden of performing the connection tests with the routers. Inaddition, the connection tests need to be performed also when a new model of router is released or when firmware of the old model is updated, and hence the connection tests to be carried out tend to increase, which raises another problem that sufficient connection tests cannot be performed.

An object of the present invention, which has been made in order to solve the above-mentioned problems, is to provide a network communication device capable of reducing the number of times a manufacturer of the network communication device performs a connection test with a router.

In order to solve the above-mentioned problems, according to the present invention, a network communication device, according to claim 1 is provided.

Further, in the network communication device having the above-mentioned configuration, the router search means, the attribute information acquisition means, and the router control means may use a protocol defined by UPnP.

### Brief Description of the Drawings

[FIG. 1] FIG. 1 is a block diagram illustrating a configuration of an amplification device that constitutes an embodiment of the present invention.
[FIG. 2] FIG. 2 is a diagram illustrating a configuration of a remote maintenance system of the amplification device that constitutes the embodiment of the present invention.
[FIG. 3] FIG. 3 is a sequence diagram illustrating an operation of the remote maintenance system of the amplification device that constitutes the embodiment of the present invention.

### Best Mode for carrying out the Invention

Hereinafter, detailed description is made of a network communication device according to an embodiment of the present invention with reference to the drawings. Note that the following embodiment is a mere example, and the present invention is not limited thereto.

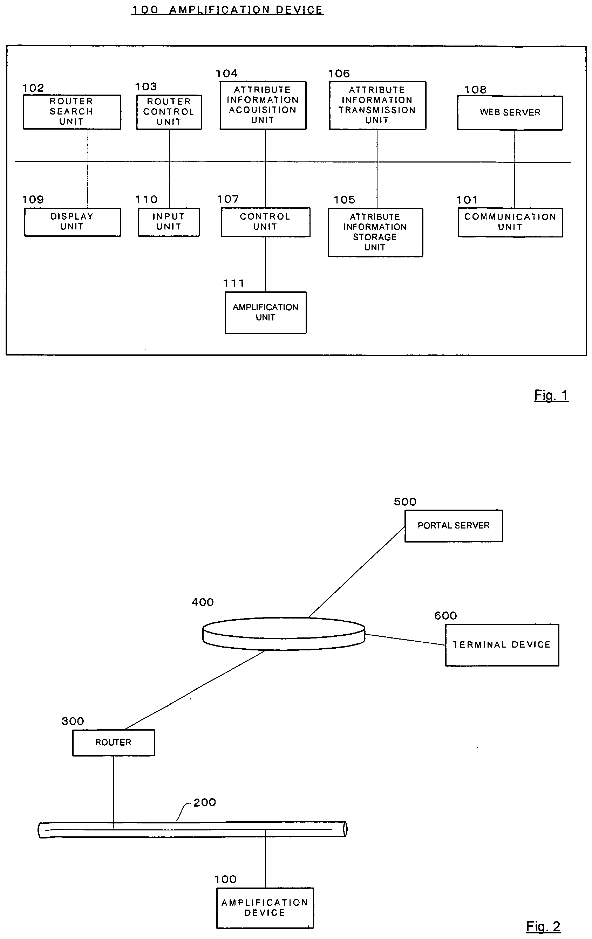

FIG. 1 is a block diagram illustrating a configuration of an amplification device that constitutes the embodiment of the present invention.

An amplification device 100 of this embodiment illustrated in FIG. 1 is an audiovisual amplifier provided with a network communication function, and includes a communication unit 101, a router search unit 102, a router control unit 103, an attribute information acquisition unit 104, an attribute information storage unit 105, an attribute information transmission unit 106, a control unit 107, a web server 108, a display unit 109, an input unit 110, and an amplification unit 111.

The communication unit 101 included in the amplification device 100 performs data communications with another network communication device through a network. The router search unit 102 has a discovery function of searching for a device conforming to UPnP on the network, and searches for a router on a local network. The router control unit 103 has a control function of controlling the device conforming to UPnP on the network, and controls the router retrieved by the router search unit 102 to perform a port forwarding setting. The attribute information acquisition unit 104 has a description function of acquiring description information from the device, and acquires the description information from the router retrieved by the router search unit 102. The attribute information storage unit 105 stores attribute information including a manufacturer name, a product name, and firmware version information of a router 300, the attribute information being contained in the description information acquired by the attribute information acquisition unit 104.

The attribute information transmission unit 106 transmits the attribute information stored in the attribute information storage unit 105 to a portal server on a wide area network. The control unit 107 centralizes control of the amplification device 100 of this embodiment. The web server 108 allows another network communication device (for example, PC) to control the amplification device 100 of this embodiment. The display unit 109 displays an operation menu and a running state of the amplification device 100. The input unit 110 receives a remote control signal transmitted from an operator or an attached remote control that allows a user to operate the amplification device 100.

The amplification unit 111 receives an input of an audio signal reproduced from a DVD player or the like, then subjects the input audio signal to a signal processing, and amplifies the audio signal. The amplified audio signal is output to a speaker system (not shown).

FIG. 2 is a diagram illustrating a configuration of a remote maintenance system of the amplification device 100. As illustrated in FIG. 2, the amplification device 100 is connected to a local network 200 such as an in-house LAN. The local network 200 is connected to a wide area network 400 such as the Internet via the router 300. The router 300 is the device conforming to UPnP. A portal server 500 is managed by the manufacturer of the amplification device 100, and is connected to the wide area network 400. The portal server 500 includes a database for accumulating the attribute information on the router 300, which is transmitted from the amplification device 100. A terminal device 600 is connected to the wide area network 400, and is a PC or the like that controls the amplification device 100.

On the amplification device 100 of this embodiment, which includes the web server 108, settings can be made to the amplification device 100 from the PC or the like connected to the local network 200 by using a browser. Alternatively, a service person or the like for the manufacturer of the amplification device 100 can access the web server 108 from the terminal device 600 on the wide area network 400 to thereby perform settings to the amplification device 100.

In the remote maintenance system of the amplification device 100, the port forwarding setting is performed on the router 300 in order to allow access from the wide area network 400 to the web server 108 of the amplification device 100 existing on the local network 200. Port forwarding is a function of forwarding a communication packet transmitted to a predetermined port of the router 300 on a wide area network 400 side to a predetermined IP address and port on a local network 200 side. This function allows access from the wide area network 400 to the local network 200, and further allows access from the terminal device 600 to the web server 108 of the amplification device 100.

In this embodiment, a UPnP protocol is used to automatically set the port forwarding for the router 300 from the amplification device 100 via the local network 200. If the router 300 conforms to UPnP, it is possible to automatically perform the port forwarding setting for the router 300 from the amplification device 100. The amplification device 100 of this embodiment conforms to UPnP, and the router search unit 102, the router control unit 103, and the attribute information acquisition unit 104 each operate according to UPnP.

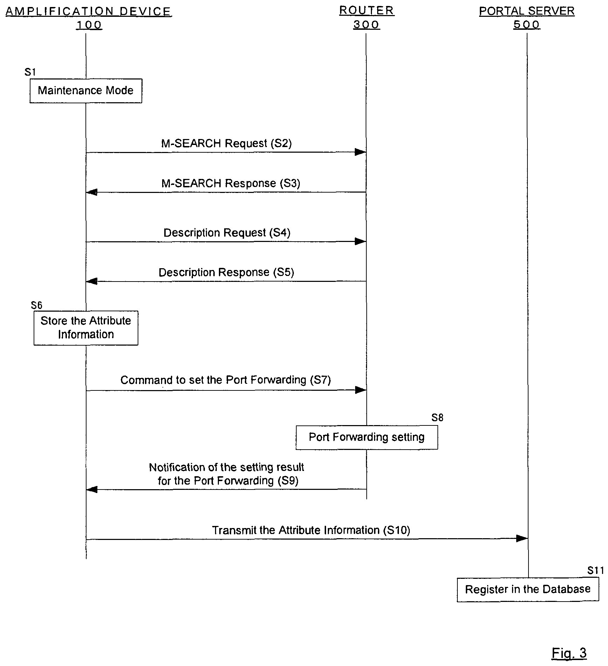

FIG. 3 is a sequence diagram illustrating an operation of the remote maintenance system of the amplification device 100. Hereinafter, FIG. 3 is used to describe remote maintenance according to this embodiment in detail. First, the user operates the attached remote control or the input unit 110 to bring the amplification device 100 into a state that allows the remote maintenance (hereinafter, referred to as "maintenance mode") (Step S1). When the amplification device 100 is brought into the maintenance mode, the router search unit 102 uses the discovery function to transmit an M-SEARCH request to the local network 200 via the communication unit 101 in a broadcast manner (Step S2).

When a device conforming to UPnP is connected to the local network 200, an M-SEARCH response is returned to the amplification device 100 from the device. When receiving the M-SEARCH request from the amplification device 100, the router 300 on the local network 200, which is the device conforming to UPnP, returns the M-SEARCH response to the amplification device 100 (Step S3).

When the amplification device 100 receives the M-SEARCH response from the router 300, the attribute information acquisition unit 104 uses the description function to transmit a description request to the router 300 via the communication unit 101 (Step S4) . When receiving the description request from the amplification device 100, the router 300 returns a description response to the amplification device 100 (Step S5). The amplification device 100 stores the attribute information including the manufacturer name, the product name, and the firmware version information of the router 300 into the attribute information storage unit 105, the attribute information being contained in the description information received by means of the description response from the router 300 (Step S6) .

Subsequently, the router control unit 103 transmits a command to set the port forwarding for the router 300 to the router 300 via the communication unit 101 (Step S7). When receiving the command to set the port forwarding from the amplification device 100, the router 300 performs the port forwarding setting (Step S8), and notifies the amplification device 100 of a setting result therefor (Step S9). When the amplification device 100 receives a notification of the setting result for the port forwarding from the router 300, and when the port forwarding setting is successful, the attribute information transmission unit 106 transmits the attribute information stored in the attribute information storage unit 105 to the portal server 500 via the communication unit 101 (Step S10) . The portal server 500 registers the attribute information received from the amplification device 100 in the database (Step S11).

After the above-mentioned steps, the router 300 is brought into a state in which the communication packet transmitted from the wide area network 400 can be forwarded to the amplification device 100 by the port forwarding setting. Therefore, it is possible to use the browser or the like to access the web server 108 of the amplification device 100 from the terminal device 600 such as the PC or the like used for maintenance which can be connected to the wide area network 400, and hence the service person or the like for the manufacturer of the amplification device 100 can perform various setting works for the amplification device 100 in place of the user.

If the port forwarding setting for the router 300 is failed in Step S8 described above, the attribute information transmission unit 106 does not transmit the attribute information on the router 300 for which the setting has been failed. Accordingly, the database of the portal server 500 can be provided as a database of the attribute information on the routers for which the amplification device 100 has succeeded in the port forwarding setting.

Alternatively, irrespective of a success/failure in the port forwarding setting for the router 300, the attribute information may be transmitted to the portal server 500 with the addition of a flag that indicates the success or failure in the port forwarding setting depending on the notification of the setting result for the port forwarding received from the router 300. Accordingly, the database of the portal server 500 can be provided as the database that allows distinction between the attribute information on the router for which the amplification device 100 has succeeded in the port forwarding setting and the attribute information on the router for which the amplification device 100 has failed in the port forwarding setting.

Further, the attribute information transmitted to the portal server 500 contains the firmware version information of the router 300. Therefore, even if there exist a plurality of firmware versions in the same model of router based on updates of firmware for the router, the database of the portal server 500 can be provided as the database that indicates whether or not the amplification device 100 can perform the port forwarding setting for each firmware version for the router.

In Step S10 described above, the attribute information transmission unit 106 may be configured to add a model name, a model version, and identification information such as a MAC address of the amplification device 100 to the attribute information to be transmitted to the portal server 500. Accordingly, even in such a case where the manufacturer has released a plurality of models or versions of amplification devices 100, the database of the portal server 500 can be provided as the database that indicates whether or not the port forwarding setting can be performed based on combinations of various amplification devices 100 and routers 300.

By using the amplification device 100 of this embodiment described above, the manufacturer of the amplification device 100 can reference the database of the portal server 500 to thereby confirm whether or not the port forwarding setting can be performed from the amplification device 100 based on various combinations of the amplification device 100 and the router 300. Accordingly, it is possible to omit a connection test for a combination of the amplification device 100 and the router 300 for which a normal operation has been confirmed from the database of the portal server 500, which can greatly reduce a burden on the manufacturer.

The network communication device according to the present invention has been described as the amplification device 100 in the above-mentioned embodiment, but the present invention may also be applied to network equipment which performs the port forwarding setting for the router, such as a remote monitoring camera and an online game machine.

What has been described above in detail is a mere example of the present invention, and it could be easily understood by a person skilled in the art that a great number of modifications can be made in this illustrative embodiment without remarkably departing from the novel disclosure or advantages of the present invention. Therefore, all of those modifications are intended to be included in the scope of the present invention.

### Industrial Applicability

The present invention is extremely useful for the network communication device connected to the local network.

## Claims

1. A network communication device (100), for connection to a local network (200) and which is capable of communicating via a router (300) with a portal server (500) connected to a wide area network (400), the network communication device (100) including:
router search means (102) for searching for the router connected to the local network;
attribute information acquisition means (104) for acquiring attribute information relating to attributes of the router retrieved by the router search means (102) from the router (300), the attribute information including a manufacturer name, a product name and firmware version information of the router;
attribute information storage means (105) for storing the attribute information acquired by the attribute information acquisition means (104);
router control means (103) for controlling the router (300) retrieved by the router search means (102) to perform a port forwarding setting; and
attribute information transmission means (106) for transmitting to the portal server (500)
the attribute information stored in the attribute information storage means (105) along with a flag indicating if the port forwarding setting for the router is successful or has failed, and
a product name, a product version, and identification information of the network communication device.

2. A network communication device (100) according to claim 1, wherein the router search means (102), the attribute information acquisition means (104), and the router control means (103) use a protocol defined by UPnP.

3. An operating method of a network communication device for connection to a local network and which is capable of communicating via a router with a portal server connected to a wide area network,
the operating method of the network communication device including:
searching for the router connected to the local network;
acquiring, from the router found by the search, attribute information relating to attributes of the router, wherein the attribute information includes a manufacturer name, a product name and firmware version information of the router;
storing the acquired attribute information;
controlling the router found by the search to perform a port forwarding setting and receiving notification of a setting result; and
transmitting to the portal server
the stored attribute information along with a flag indicating if the port forwarding setting for the router is successful or has failed, and
a product name, a product version, and identification information of the network communication device.

4. A network communication method according to claim 3, further comprising using a protocol defined by UPnP in the searching, acquiring and controlling steps.

## Patentansprüche

1. Netzwerkkommunikationsvorrichtung (100) für eine Verbindung mit einem lokalen Netzwerk (200), wobei die Netzwerkkommunikationsvorrichtung (100) geeignet ist, über einen Router (300) mit einem Portalserver (500) zu kommunizieren, der mit einem Weitverkehrsnetz (400) verbunden ist, wobei die Netzwerkkommunikationsvorrichtung (100) Folgendes umfasst:
Routersuchmittel (102) zur Suche nach dem Router, der mit dem lokalen Netzwerk verbunden ist;
Attributinformationserfassungsmittel (104) zum Erfassen von Attributinformationen, die sich auf Attribute des Routers beziehen, die durch die Routersuchmittel (102) vom Router (300) abgerufen werden, wobei die Attributinformationen einen Herstellernamen, einen Produktnamen und Firmware-Versionsinformationen des Routers umfassen;
Attributinformationsspeichermittel (105) zum Speichern der durch die Attributinformationserfassungsmittel (104) erfassten Attributinformationen;
Routersteuerungsmittel (103) zum Steuern des Routers (300), die durch die Routersuchmittel (102) abgerufen werden, um eine Port-Weiterleitungseinstellung auszuführen; und
Attributinformationsübertragungsmittel (106), um an den Portalserver (500) Folgendes zu übertragen:
die in den Attributinformationsspeichermitteln (105) gespeicherten Attributinformationen gemeinsam mit einem Statuszeichen, das anzeigt, ob die Port-Weiterleitungseinstellung für den Router erfolgreich ist oder fehlgeschlagen hat, und
einen Produktnamen, eine Produktversion und Identifizierungsinformationen der Netzwerkkommunikationsvorrichtung.

2. Netzwerkkommunikationsvorrichtung (100) gemäß Anspruch 1, worin die Routersuchmittel (102), die Attributinformationserfassungsmittel (104) und die Routersteuerungsmittel (103) ein durch UPnP definiertes Protokoll anwenden.

3. Betriebsverfahren einer Netzwerkkommunikationsvorrichtung für eine Verbindung mit einem lokalen Netzwerk, wobei die Netzwerkkommunikationsvorrichtung über einen Router mit einem Portalserver kommunizieren kann, der mit einem Weitverkehrsnetz verbunden ist,
wobei das Betriebsverfahren der Netzwerkkommunikationsvorrichtung Folgendes umfasst:
Suchen nach dem Router, der mit dem lokalen Netzwerk verbunden ist;
Erfassen, von dem durch die Suche gefundenen Router, von Attributinformationen, die sich auf Attribute des Routers beziehen, worin die Attributinformationen einen Herstellernamen, einen Produktnamen und Firmware-Versionsinformationen des Routers umfassen;
Speichern der erfassten Attributinformationen;
Steuern des durch die Suche gefundenen Routers, um eine Port-Weiterleitungseinstellung auszuführen und Empfangen einer Benachrichtigung eines Einstellungsergebnisses; und
Übertragen
der gespeicherten Attributinformationen gemeinsam mit einem Statuszeichen, das anzeigt, ob die Port-Weiterleitungseinstellung für den Router erfolgreich ist oder fehlgeschlagen hat, und
eines Produktnamens, einer Produktversion und von Identifizierungsinformationen der Netzwerkkommunikationsvorrichtung an den Portalserver.

4. Netzwerkkommunikationsverfahren gemäß Anspruch 3, ferner umfassend die Anwendung eines durch UPnP definierten Protokolls in den Such-, Erfassungs- und Steuerungs-Schritten.

## Revendications

1. Dispositif de communication en réseau (100) destiné à être connecté à un réseau local (200) et qui est en mesure de communiquer par l'intermédiaire d'un routeur (300) avec un serveur de portail (500) connecté à un réseau étendu (400), le dispositif de communication en réseau (100) incluant :
un moyen de recherche de routeur (102) pour rechercher le routeur connecté au réseau local ;
un moyen d'acquisition d'informations d'attributs (104) pour acquérir des informations d'attributs connexes à des attributs du routeur récupéré par le moyen de recherche de routeur (102), auprès du routeur (300), les informations d'attributs incluant un nom de fabricant, un nom de produit et des informations de version de micrologiciel du routeur ;
un moyen de stockage d'informations d'attributs (105) pour stocker les informations d'attributs acquises par le moyen d'acquisition d'informations d'attributs (104) ;
un moyen de commande de routeur (103) pour commander au routeur (300) récupéré par le moyen de recherche de routeur (102) de mettre en oeuvre un paramétrage de transfert de port ; et
un moyen de transmission d'informations d'attributs (106) pour transmettre au serveur de portail (500) :
les informations d'attributs stockées dans le moyen de stockage d'informations d'attributs (105) conjointement avec un drapeau indiquant si le paramétrage de transfert de port pour le routeur a réussi ou a échoué ; et
un nom de produit, une version de produit et des informations d'identification du dispositif de communication en réseau.

2. Dispositif de communication en réseau (100) selon la revendication 1, dans lequel le moyen de recherche de routeur (102), le moyen d'acquisition d'informations d'attributs (104) et le moyen de commande de routeur (103) utilisent un protocole défini par le service UPnP.

3. Procédé d'exploitation d'un dispositif de communication en réseau destiné à être connecté à un réseau local et qui est en mesure de communiquer par l'intermédiaire d'un routeur avec un serveur de portail connecté à un réseau étendu,
le procédé d'exploitation du dispositif de communication en réseau incluant les étapes ci-dessous consistant à :
rechercher le routeur connecté au réseau local ;
acquérir, auprès du routeur trouvé dans le cadre de la recherche, des informations d'attributs connexes à des attributs du routeur, dans lequel les informations d'attributs incluent un nom de fabricant, un nom de produit et des informations de version de micrologiciel du routeur ;
stocker les informations d'attributs acquises ;
commander au routeur trouvé dans le cadre de la recherche de mettre en oeuvre un paramétrage de transfert de port et recevoir une notification d'un résultat de paramétrage ; et
transmettre au serveur de portail :
les informations d'attributs stockées conjointement avec un drapeau indiquant si le paramétrage de transfert de port pour le routeur a réussi ou a échoué ; et
un nom de produit, une version de produit et des informations d'identification du dispositif de communication en réseau.

4. Procédé de communication en réseau selon la revendication 3, comprenant en outre l'étape consistant à utiliser un protocole défini par le service UPnP, dans le cadre des étapes de recherche, d'acquisition et de commande.
